# EUROPEAN PATENT APPLICATION

(11) **EP 2 942 252 A1**
(43) Date of publication of application: **11.11.2015**
(21) Application number: 15158549.4
(22) Date of filing: 11.03.2015
(51) Int. Cl.: B60W 30/18, B60W 50/08, B60W 50/00

(54) **Function control in a vehicle**

(30) Priority: 12.03.2014 SE 1450278
(71) Applicant: Scania CV AB, 151 87 Södertälje (SE)
(72) Inventor: Gustafsson, Erik, 151 47 Södertälje (SE)

(57) **Abstract**

Method (400) and calculation device (210) for control of a function (300) in a vehicle (100), such as control of a crane, via an electronic clutch control (200). Method (400) characterised by: determination (401) of the function (300), which the electronic clutch device (200) should control, wherein said function (300) is another function than control of a clutch (240) in the vehicle (100); detection (402) of a position of the electronic clutch control (200); generation (403) of a control signal coinciding with the detected (402) position, and the determined (401) function (300) of the electronic clutch control (200); and control (404) of the determined (401) function (300) via the generated (403) control signal. This allows the use of the clutch pedal (200) to control the clutch (240) or other vehicle elements (300), depending on the function selected via the input (215).

## Description

### TECHNICAL FIELD

This document describes a method and a calculation device in a vehicle. Specifically, a method and a calculation device are described for controlling a function in the vehicle, via an electronic clutch control, in addition to controlling the vehicle's clutch.

### BACKGROUND

In a vehicle, a clutch control is sometimes used to brake the drive between an engine and a gearbox, and thereby facilitating a change of gears, in particular when starting a vehicle from a standstill. This applies both when driving with a manual gearbox and with a so-called Automated Manual Transmission (AMT)-gearbox. When driving with an AMT gearbox the driver may often choose between manual and automatic transmission via a control system.

Vehicle in this context means e.g. a truck, truck with trailer, pick-up, van, wheel loader, bus, motorbike, off-road vehicle, tracked vehicle, snow scooter, tank, moped, quad, tractor, crane truck, tow truck, light vehicle, passenger car or other similar motor-driven, manned or unmanned transport means, adapted for land-based geographic transportation.

In some types of vehicles, for example, trucks, articulated trucks or buses, the clutch control often consists of a clutch pedal manoeuvred with the foot while, on a motorbike, moped or quad, it often consists of a clutch handle, which the driver manoeuvres with one hand, usually the left hand.

The clutch control traditionally has a mechanical or hydraulic power transmission to the clutch, the power transmission between the engine and the gearbox being interrupted when the clutch control is pressed. Electronic clutch controls is a technology which has been developed later, lacking any traditional physical mechanical or hydraulic power transmission to the clutch. Instead, the clutch control's position controls the control signals, which are sent electronically, via wire or wirelessly, to an actuator that in turn interrupts the power transmission via the clutch, to the extent set out by the control signals. This technology is sometimes called "clutch-by-wire".

Often, the driver of a vehicle faces the problem of controlling, not only the clutch and the transmission of the vehicle, but also other functions in the vehicle. One example is in case of a load change, where the driver wants to be able to control the speed of the vehicle at the same time as the engine speed, in order thus to control the speed of the movement of the hook on the loader arm. This requires that the positions of the accelerator pedal and the clutch pedal are balanced against each other, which requires extensive delicacy and experience in the driver to function successfully.

Sometimes, a vehicle is used, for example a truck, as a basis for further development by a so-called body-builder specialised in building some special vehicles, such as crane lorries, vehicles with special loader arms, fire trucks with a folding ladder, snow removal vehicles, car transporters, car towers, or similar. One problem which arises is that additional body work superstructures on the vehicle need to be manoeuvred by the driver.

This could be resolved by building in additional controls in the driver's cabin of the vehicle. However, the driver environment is often already full of controls, push-buttons, instrument panels, navigation equipment, communication equipment etc. If additional controls must be retrofitted, this must be done in positions inside the driver's cabin that are not already occupied, and for this reason there is a risk that such controls may be placed at positions, which are difficult to access and localise for the driver. This may not only penalize the driver ergonomically, but also constitute a traffic hazard, since the driver is forced to reach and grope for remotely placed controls, and may therefore lose focus of the surrounding traffic situation.

If the vehicle manufacturer knew the requirements of the body-builder in advance, some parts of the instrument panel might be reserved for the body-builder's controls. However, this would mean that the vehicles not being equipped with body work by body-builders, i.e. a majority, would have to abstain from an ergonomically attractive part of the instrument panel for control purposes. Additionally, different body-builders have different requirements and requests relating to control possibilities.

From a manufacturing perspective, it is more difficult and expensive to use different sets, designs and locations of controls in different vehicles, since for example a greater number of components must be kept in stock. It is also desirable to reduce the number of controls in each vehicle for cost reasons, without therefore limiting the possibilities of function control in the vehicle.

Another problem in connection with vehicle control is that different drivers, as well as different vehicle types, or vehicles used in different environments, may need or request the ability to adjust controls and functions in these, so that certain frequently used functions have an easily accessible and expedient placement.

Another problem with vehicle controls is that they often require the driver to let go of the steering wheel with one hand, in order to be able to reach and manoeuvre these controls. This is undesirable, since the driver's possibility of quick evasive action or similar with the vehicle is thereby reduced.

It may be concluded that much remains to be done to improve the control of different functions in a vehicle, and to facilitate implementation by body-builders of new functions in the vehicle.

### SUMMARY

Therefore, an objective of this invention is to be able to resolve at least one of the problems specified above, thus to improve the control of a function in a vehicle, and thus to achieve a vehicle improvement.

According to a first aspect of the invention, this objective is achieved through a method for control of a function in a vehicle, such as control of a crane, via an electronic clutch control. The method comprises determination of the function which the electronic clutch control must control, wherein said function is another function than control of a clutch in the vehicle. Further, the method comprises detection of a position of the electronic clutch control. The method also comprises generation of a control signal, which coincides with the detected position and the determined function of the electronic clutch control. Further, the method also comprises control of the determined function through the generated control signal.

According to another aspect of the invention, this objective is achieved by a calculation device, arranged for control of a function in a vehicle, via an electronic clutch control. The calculation device comprises a processor circuit, arranged to determine the function that the electronic clutch control must control, wherein said function is another function than control of a clutch in the vehicle. Further, the calculation device is also arranged to detect a position of the electronic clutch control via a sensor. Additionally, the calculation device is also arranged to generate a control signal, which coincides with the detected position and the determined function of the electronic clutch control. The calculation device is also arranged to control the determined function via the generated control signal.

By facilitating a change of functionality of the electronic clutch control in the vehicle, so that it does not only control the clutch, but also controls one or several other functions, and by allowing the driver to choose what function the electronic clutch control should control, the control of different functions in the vehicle is improved. The driver may, accordingly, control a selected function with the foot, since the electronic clutch control consists of a pedal, which frees both hands of the driver for other tasks. Furthermore, the number of controls in the driver's cabin may be reduced, providing a more clearly arranged driver environment, and a simpler and therefore cheaper production. Furthermore, the control of body work functions in the vehicle, such as cranes, work tools, etc. is facilitated, since the electronic clutch control may be configured retroactively by the body-builder to control the superstructure. Thus, an improved control of this function is achieved, and accordingly a better and safer vehicle.

Other advantages and other novel features are set out in the following detailed description of the invention.

### LIST OF FIGURES

Embodiments of the invention are described below in further detail with reference to the enclosed figures, which illustrate embodiments of the invention:
- **Figure 1**: illustrates a vehicle according to one embodiment.
- **Figure 2**: schematically illustrates a vehicle according to one embodiment.
- **Figure 2B**: schematically illustrates a vehicle according to one embodiment.
- **Figure 2C**: illustrates an example of a screen according to one embodiment.
- **Figure 3A**: illustrates an alternative embodiment of a vehicle interior.
- **Figure 3B**: illustrates an alternative embodiment of a vehicle interior.
- **Figure 4**: is a flow chart illustrating one embodiment of the invention.
- **Figure 5**: is an illustration of a control device according to one embodiment of the invention.

### DETAILED DESCRIPTION

Embodiments of the invention comprise a method and a control device, which may be realised according to any of the examples described below. Different embodiments of the invention may, however, be realised in many different forms and shall not be seen as limited by the embodiments described herein, which are instead intended to illustrate and visualise various aspects of the invention.

Further aspects and features of the invention may become apparent from the following detailed description, when considered in connection with the enclosed figures. The figures should, however, only be seen as examples of various embodiments of the invention, and should not be seen as limiting the invention, which is limited only by the enclosed claims. Further, the figures are not necessarily drawn to scale and are, unless otherwise indicated, intended to illustrate the aspects of the invention conceptually.

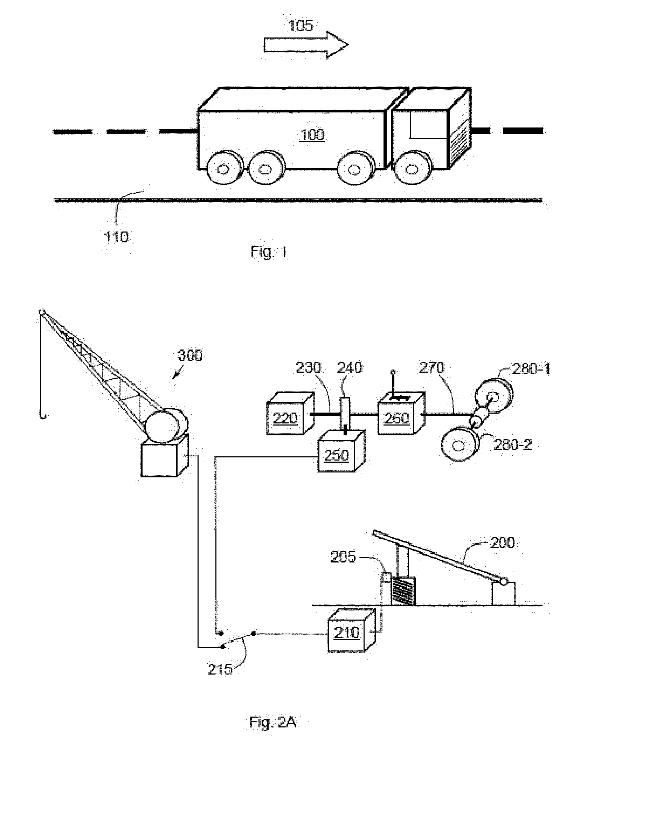

**Figure 1** shows a vehicle **100,** adapted for motor-driven travel in, among others, a first travelling direction **105** on a road **110.** The vehicle 100 may, for example, but not necessarily, be a commercial vehicle, a bus, or it may consist of any of the previously listed types of vehicles, or similar land-based means of transportation.

The vehicle 100 has an electronic clutch control, a so-called clutch-by-wire, where a traditional mechanical control system is replaced by an electronic control system, with the help of electromechanical actuators and a human-machine interface emulating the pedal and steering feel. With a clutch-by-wire there is no physical/mechanical connection between the clutch pedal and the clutch. Instead, one or several sensors tell a computer, or another calculation device, how far down the driver has pressed the pedal, and this information is translated and sent to an actuator which controls the clutch. Accordingly, a number of mechanical components may be omitted, which reduces the manufacturing cost and vehicle weight, and simplifies the placement of the clutch and the powertrain in relation to the clutch control. Thus, a new degree of freedom is also introduced in the system, wherein the clutch control may also be used for other functions than only control of the clutch. Such alternative functions of the clutch control may thus be entirely unrelated to the vehicle's clutch and, comprise for example control of a body work function, such as a crane or similar.

One example where this could be useful is at load change. In such case, the driver wants to be able to simultaneously control the speed of the vehicle 100 and the engine speed, in order thus to control the speed of the movement of the hook. This requires balancing the pedals' position against each other, which is generally a difficult control method. Compare, for example, with a combined fridge freezer, where the temperatures are set separately from each other, rather than having a joint cooling flow and a distribution of this flow between the parts.

Sometimes the vehicle 100 is used as a basis for further development by a so-called body-builder, specialised in building certain special vehicles, such as for example a crane lorry, vehicles with special loader arms, fire trucks with foldable ladders, snow removal vehicles, car transporters, car towers or similar. The body-builder may then use the electronic clutch control to control one or several body work functions, without having to fit in additional controls in the vehicle 100.

**Figure 2A** schematically shows an example of a powertrain in the vehicle 100, how the connection thereto is manoeuvred according to one embodiment of the present invention, and how a body work function may alternatively be manoeuvred with a clutch control **200.**

The clutch control 200 may consist of a pedal according to one embodiment, arranged to be manoeuvred by the vehicle's driver with the foot, usually the driver's left foot. A sensor **205** may detect the position of the clutch control, and send this information to the calculation device **210.** Via an input device **215** the function of the electronic clutch control 200 may be controlled by the driver.

The vehicle's powertrain comprises a combustion engine **220,** which via an output shaft **230** of the combustion engine 220, for example via a flywheel, is connected with a clutch **240.** The clutch 240 may be connected and disconnected via a control device **250.**

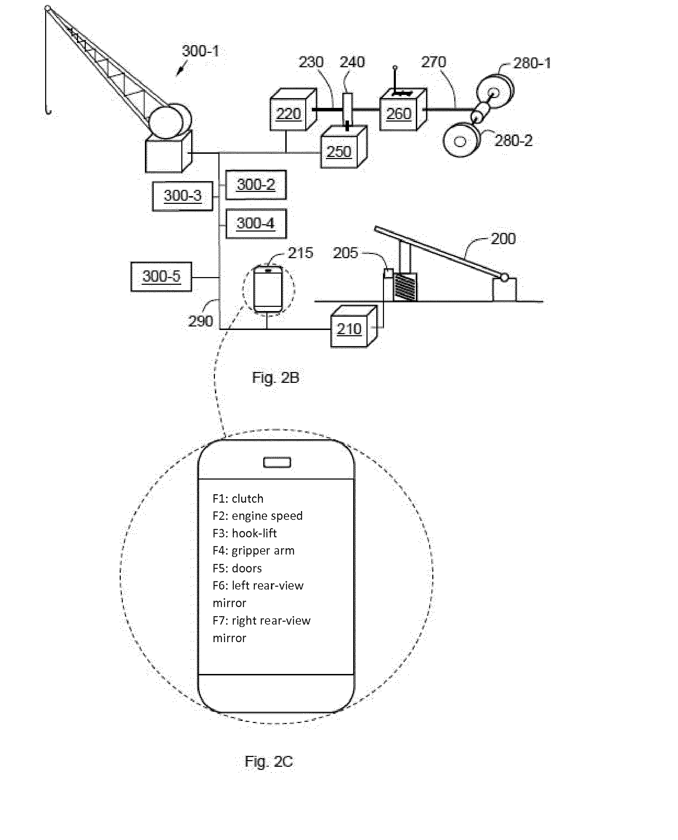

The clutch 240 may e.g. consist of an automatically controlled clutch, which for example may be of a dry plate type. The friction element's (plate's) engagement with the flywheel on the engine output shaft may be controlled with the help of a pressure plate, which may be displaceable laterally by means of e.g. a lever, whose function may be controlled by a clutch actuator. The clutch actuator's impact on the lever is in turn controlled by the vehicle's clutch control system, via a control device 250. The control device 250 may also control the gearbox **260.** Such a control device 250 may sometimes, for example, be called a Transmission Control Unit (TCU). For the sake of simplicity, Figure 2 above shows only one control device 250, where functions for several different control functions are gathered, such as control of the combustion engine 220, but the vehicle 100 may in other embodiments comprise several control devices, to which the control functions mentioned above may be allocated.

The vehicle 100 also comprises drive shafts connected to the vehicle's driving wheels **280-1, 280-2,** and which are driven by an output shaft 270 from the gearbox 260. The vehicle 100, which is schematically shown in Figure 2, comprises only two driving wheels 280-1, 280-2, but embodiments of the invention are applicable also to a vehicle 100 with several drive shafts, equipped with one or several driving wheels.

The control system in the vehicle 100 may consist of a communication bus system, consisting of one or several communications buses to connect a number of electronic control devices (ECUs), or control devices/controllers, and different components localised in the vehicle 100. Such a control system may comprise a large number of control devices, and the responsibility for a specific function may be distributed among more than one control device. Similarly, a control device may be arranged to be responsible for several functions.

The control device 250 may in turn be arranged to communicate with other devices, such as the calculation device 210, in order to receive signals and measurement values, and possibly also trigger a measurement, e.g. at a certain time interval. Further, the control device 250 may also be arranged to communicate, e.g. via the vehicle's communications link, which may consist of one or several of a cable; a data bus, such as a CAN (Controller Area Network) bus, a MOST (Media Oriented Systems Transport) bus, or another bus configuration.

The control device 250 may also, or alternatively, be arranged for wireless communication over a wireless interface, according to some embodiments. The wireless interface may consist of a radio transmitter based on wireless communication technology, such as 3rd Generation Partnership Project (3GPP), Long Term Evolution (LTE), LTE-Advanced, Evolved Universal Terrestrial Radio Access Network (E-UTRAN), Universal Mobile Telecommunications System (UMTS), Global System for Mobile Communications/Enhanced Data rate for GSM Evolution (GSM/EDGE), Wideband Code Division Multiple Access (WCDMA), World-Wide Interoperability for Microwave Access (WiMax), Wireless Local Area Network (WLAN) Ultra Mobile Broadband (UMB), Bluetooth (BT), Near Field Communication (NFC) or an infrared transmitter, mentioned herein as a few possible examples of wireless communication.

The input device 215 may in the example illustrated control the control signals from the calculation device 210 to the control device 250. The input device 215 may in some embodiments be a separate device, such as a touch screen, a keyboard, a mobile phone or similar. Alternatively, the input device 215 may in some embodiments be an integrated part of the control device 250. Thus, the clutch 240 may be controlled via the clutch control 200, since this function is connected via the input device 215. The driver may, if needed, indicate via the input device 215 that control of another function 300 is requested, in the case illustrated, a crane. Other examples of such a function 300 may be, for example, a hook-lift, engine speed, flat-bed angle on a tip truck, a snow scraper, a derrick, a gripper arm, winch, foldable ladder, door, excavator, trailer hitch, hoist, cargo ramp, or some other configurable function.

Since many of said functions 300 are used or controlled when the vehicle 100 is usually at a standstill, there is no need to use the clutch 240. Therefore, the driver may control the function 300, such as for example a crane, with the foot, which means it is possible for him/her to control another function with both hands, in combination with the crane. For example, the crane's tilt angle in relation to a horizontal plane may be controlled with the clutch control 200, while the driver may control, with a first manual control, the crane's rotation in a horizontal plane, and with a second manual control, may control the winch with the hook. This is mentioned as a non-limiting example.

Figure 2B schematically shows an example, similar to the example displayed in figure 2A, of a powertrain in the vehicle 100, how its connection is manoeuvred according to one embodiment of the present invention, and how several functions **300-1, 300-2, 300-3, 300-4, 300-5** may alternatively be manoeuvred with the clutch control 200 by the driver's selection, via the input device 215. One example of the input device 215 and the functions 300-1, 300-2, 300-3, 300-4, 300-5 that may be controlled is illustrated in **figure 2C****.**

The driver may thus select, for example from a list, what function 300 (s)he wishes to control. In some embodiments, the driver, the vehicle owner or the vehicle manufacturer or a body-builder of the vehicle, or some other person, may configure the function(s) 300 desired, by for example adding and/or subtracting one or several functions 300.

Accordingly, great flexibility is achieved in the control of different functions 300 in the vehicle 100, as well as adaptability to a variable need for design of such function control.

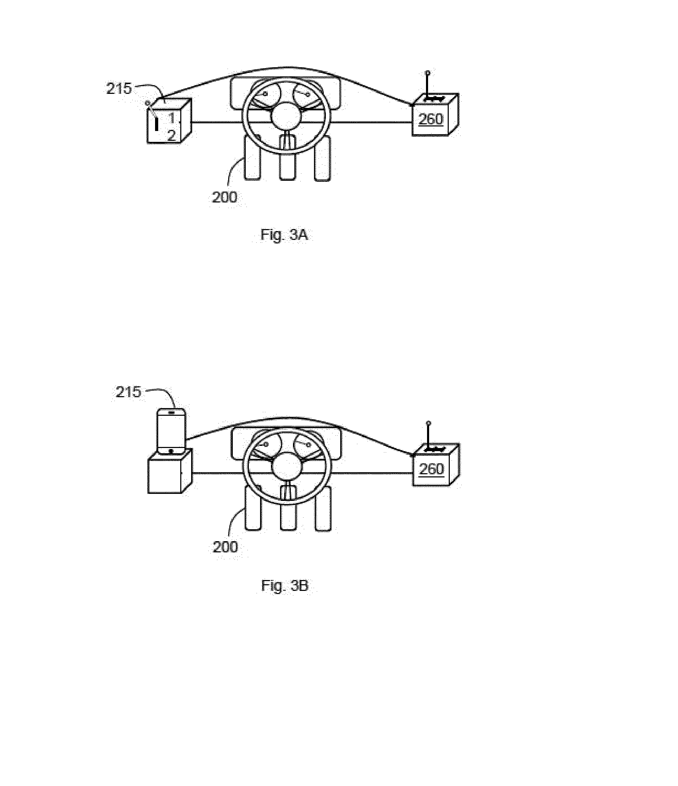

**Figure 3A** shows an example of a vehicle interior in the vehicle 100, schematically illustrated in figure 2. The driver may, via the input device 215, shift between two different functions 300, which may be controlled alternately with the clutch control 200. One of these functions 300 is perhaps suitably the control of the clutch in the vehicle. The second function is another function than clutch control, for example control of a crane fitted on the vehicle 100, as previously discussed.

**Figure 3B** shows an example of a vehicle interior in the vehicle 100, illustrated schematically in Figure 2B. The driver may, via the input device 215, alternate between several different functions 300, which may be controlled alternately with the clutch control 200. One of these functions 300 is suitably the clutch 240. Other functions may for example be a crane fitted on the vehicle 100, as discussed previously, or a configurable function.

The input device 215 may in some embodiments consist of a touch screen, a keyboard, a mobile phone or similar. The interface in such input device 215 may in some embodiments be downloaded, for example in the form of an application software which the vehicle's driver, the vehicle's owner, a body-builder of the vehicle or a similar party may install, activate and/or allow. Such an application software may sometimes be referred to as an application or an app. Accordingly, a configuration of a controllable function 300 in the vehicle 100 is facilitated via the vehicle's clutch control 200, which is not necessarily related to the vehicle's clutch.

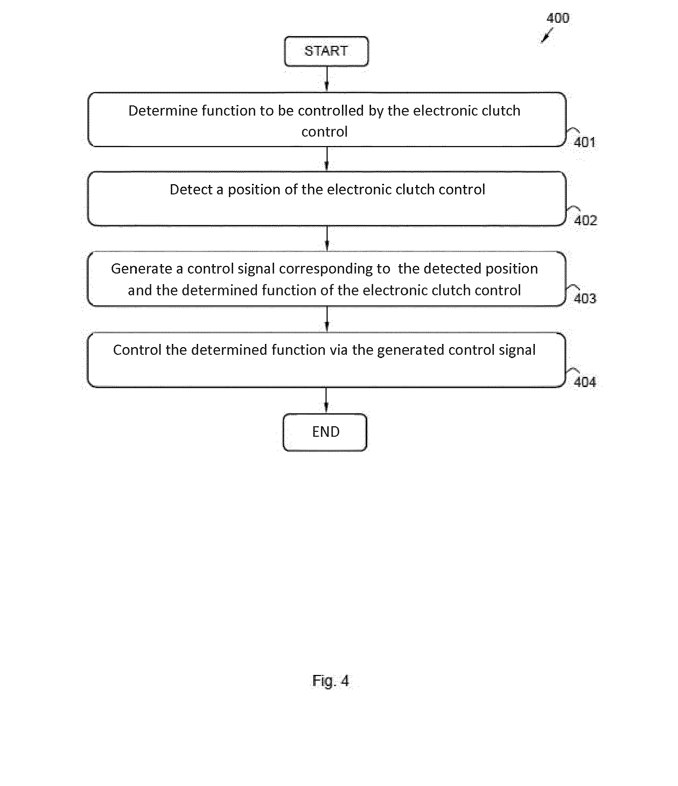

**Figure 4** illustrates an example of one embodiment of the invention. The flow chart in figure 4 illustrates a method **400** for controlling a function 300 in a vehicle 100, such as for example controlling a crane, via an electronic clutch control 200. The electronic clutch control 200 may consist of, or be based on, a clutch-by-wire solution and consist of for example a pedal or a handle. In some embodiments the electronic clutch control 200 may be connected to the vehicle's control bus 290, whereat the input device 215 may comprise a touch screen, a keyboard, keypad, mobile phone or similar, and whereat the controllable function 300, which is not related to the clutch 240 in the vehicle 100, may be selected by the driver from a list, via the input device 215.

In order to correctly regulate the function 300 in the vehicle 100, the method 400 may comprise a number of steps **401-404.**

### Step 401

The function 300 to be controlled by the electronic clutch control 200 is determined. This function 300 may be a different function from control of a clutch 240 in the vehicle 100.

Such function 300, different from control of the clutch 240 in the vehicle 100, may in some embodiments comprise control of a hook-lift, engine speed, flat-bed angle on a tip truck, a snow scraper, a derrick, a gripper arm, winch, foldable ladder, door, excavator, trailer hitch, hoist, cargo ramp, or other configurable function. Such function 300 in the vehicle 100 may be configured by a body-builder, and control a body work installed by the latter in the vehicle 100, according to some embodiments.

One advantage hereof is that a body-builder is enabled to install, in an uncomplicated manner, a user interface in the vehicle 100, to be able to control the body work function 300 without any major interventions in the driver environment. Furthermore, the vehicle's driver is able easily and efficiently to control the function 300 in the vehicle 100.

The function 300 may, however, in some embodiments consist of another in-built function 300 inside the vehicle, such as setting the angle on the left and right rear-view mirror, respectively, controlling the heat in the driver's cabin of the vehicle, setting the chair seat, or another similar function 300.

One advantage hereof is that the number of controls in the driver's cabin may be reduced, which facilitates a reduced production cost and a more easily understandable user interface for the driver in the vehicle 100.

According to some embodiments, the function 300 of the electronic clutch control 200 may be determined by the driver via an input device 215.

The input device 215 may in some embodiments be adaptable, so that the function 300 that is desired to be controlled with the electronic clutch control 200 may be added. According to some such embodiments, the input device 215 may consist of for example a keypad, a keyboard, a touch screen, a mobile phone or similar.

Accordingly, the driver is able to select a function 300 to control, and in some embodiments to add the function 300 in the vehicle 100 to control by him- or herself, via an easily understandable interface.

The function 300 of the electronic clutch control 200 may in some embodiments be determined by the vehicle's parking brake, so that the electronic clutch control 200 has a first function when the parking brake is not engaged, such as controlling the vehicle's clutch 240, and a second function 300 when the parking brake is engaged.

Often, the driver may wish to use the electronic clutch control 200 to control the clutch 240 while driving the vehicle 100, but may wish to use the control 200 to control another function 300, such as control of a work tool such as a crane, a ladder, a lift, or similar, when the vehicle 100 is at a standstill. The parking brake, or another indication that the vehicle 100 is at a standstill, may thus be used as an implicit switch for the electronic clutch control 200, between control of the clutch 240 and control of another function 300. Thus, the driver avoids having to explicitly specify the function 300 to be controlled.

According to other embodiments the parking brake, or another indication, may be used to ensure that that the vehicle 100 is at a standstill when the driver specifies the function 300 to be controlled, via the input device 215. One advantage of this is that the risk of involuntary switching of the function 300 may be eliminated, or at least reduced.

### Step 402

A position of the electronic clutch device 200 is detected. Such detection is carried out by a sensor 205, which in turn sends signals corresponding to a detected position to a calculation device 210.

### Step 403

A control signal is generated, corresponding to the detected 402 position, and the determined 401 function 300, of the electronic clutch control 200. Such control signal may be generated in the calculation device 210, based on the signal, corresponding to a position of the electronic clutch control 200, which has been obtained from the sensor 205, arranged in connection with the electronic clutch control 200.

### Step 404

The determined 401 function 300 is controlled via the generated 403 control signal.

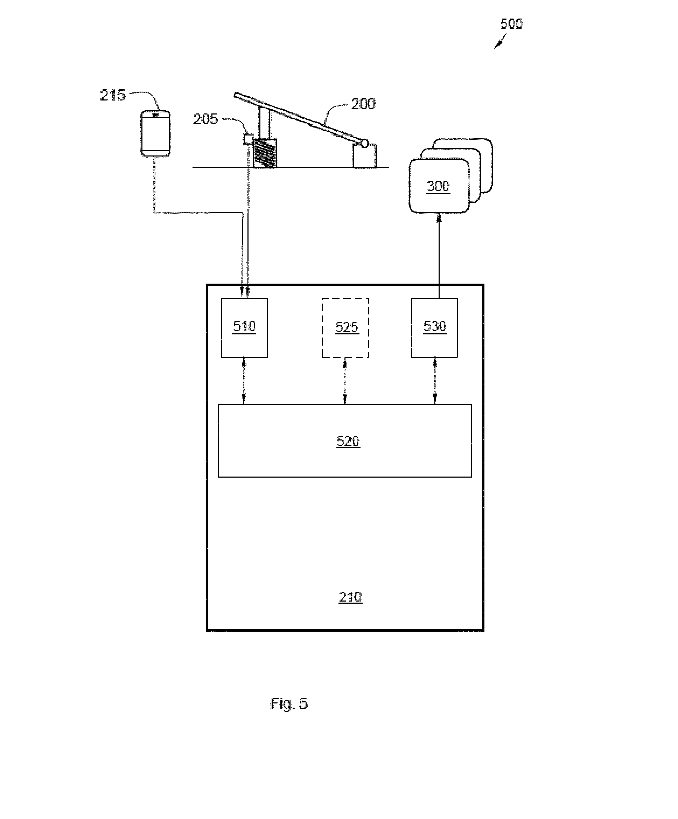

Thus, the determined 401 function 300 may be controlled proportionately to the result on the electronic clutch control 200, such as it has been detected 402 by the sensor 205. **Figure 5** shows an embodiment of a system 500 for control of a function 300 in a vehicle 100, via an electronic clutch control 200.

The electronic clutch control 200 is arranged for control of a function 300 in a vehicle 100, wherein the function 300 is another function than direct control of the clutch 240 in the vehicle 100, through the method 400 according to one or several of the above described method steps 401-404.

In some embodiments the electronic clutch control 200 may consist of a pedal, arranged for manoeuvre by the driver's foot.

The system 500 also comprises a calculation device 210 for control of a function 300 in vehicle 100, via the electronic clutch control 200. The calculation device 210 comprises a processor circuit **520,** arranged to determine the function 300, which the electronic clutch control 200 must control. Said function 300 is another function in addition to, or at the side of the control of the clutch 240. The calculation device 210 is also arranged to detect a position of the electronic clutch control 200, via a sensor 205, wherein the sensor 205 in turn is arranged to detect different positions on the electronic clutch control 200. Additionally, the calculation device 210 is also arranged to generate a control signal, coinciding with the detected position and the determined function 300 of the electronic clutch control 200. The calculation device 210 is also arranged to control the determined function 300 via the generated control signal. Thus, a control signal may be generated, corresponding to the detected position of the electronic clutch control 200, that is to say corresponding to how far the latter is pushed in.

The processor circuit 520 may consist of e.g. one or several Central Processing Units (CPU), a microprocessor or other logic adapted to interpret and carry out instructions, and/or to read and write data. The processor circuit 520 may handle data for inflow, outflow or data processing of data, comprising also buffering of data, control functions and similar.

Further, the calculation device 210 may, according to some embodiments, also comprise a memory **525,** arranged to store for example a list of one or several functions 300 that may be controlled via the electronic clutch control 200. Furthermore, the memory 525 may store, for example, a mapping between different measuring values from the sensor 205 and different control signals, or levels of control signals to be generated, according to some embodiments.

The memory device 525 may e.g. consist of a memory card, flash memory, USB memory, hard disk or other similar non-volatile data storage device of durable nature, e.g. one from the group: ROM (Read-Only Memory), PROM (Programmable Read-Only Memory), EPROM (Erasable PROM), Flash-memory, EEPROM (Electrically Erasable PROM), etc. in various embodiments.

The calculation device 210 may also comprise a signal receiver **510,** arranged to receive input from the input device 215, and/or measuring values from the sensor 205, according to some embodiments.

Furthermore, the calculation device 210 may, according to some embodiments, also comprise a sending circuit 530, arranged to send a control signal to control one or several functions 300 in the vehicle 100. This control signal may be sent, for example, via the vehicle's communications link 290, or via another wired or wireless communications link, based for example on one of the communications technologies listed above.

Furthermore, the invention comprises a computer program for control of a function 300 in a vehicle 100, via an electronic clutch control 200, implementing a method 400 according to at least one of the previously listed steps 401-404, when the computer program is executed in a processor circuit 520 in a calculation device 210. This calculation device 210 may be placed in the vehicle 100, or outside the vehicle 100, according to different embodiments.

The method 400, according to the method steps 401-404 for control of a function 300 in the vehicle 100, may be implemented by one or several processor circuits 520 in the calculation device 210, jointly with the computer program code in a non-volatile computer carrier, in order to carry out one, several, certain or all of the steps 401-404 described above. Thus, a computer program may comprise instructions to execute the steps 401-404, when the computer program is loaded in the processor circuit 520 in the calculation device 210.

Some embodiments of the invention also comprise a vehicle 100, which comprises a system 500 for control of a function 300 in the vehicle 100, via the electronic clutch control 200, via a method 400 according to one, several, certain or all of the method steps 401-404, wherein the system 500 comprises an electronic clutch control 200, a calculation device 210, a sensor 205, arranged to detect a position of the clutch control 200, and an input device 215, arranged to facilitate selection of a function 300 of the electronic clutch control 200.

## Claims

1. Method (400) for control of a function (300) in a vehicle (100), such as control of a crane, via an electronic clutch control (200), wherein the method (400) is **characterised by**:
determination (401) of the function (300),which the electronic clutch control (200) must control, wherein said function (300) is another function than control of a clutch (240) in the vehicle (100);
detection (402) of a position of the electronic clutch device (200);
generation (403) of a control signal, corresponding to the detected (402) position, and the determined (401) function (300) of the electronic clutch control (200); and
control (404) of the determined (401) function (300) via the generated (403) control signal.

2. Method (400) according to claim 1, also comprising the function (300) of the electronic clutch control (200) being determined by the driver via an input device (215).

3. Method (400) according to any of claims 1-2, also comprising the function (300) of the electronic clutch control (200) being determined by the vehicle's parking brake, so that the electronic clutch control (200) has a first function when the parking brake is not engaged, and a second function (300) when the parking brake is engaged.

4. Method (400) according to any of claims 2-3, also comprising the input device (215) being adaptable, so that the function (300), which is desired to be controllable with the electronic clutch control (200), may be added.

5. Method (400) according to any of claims 1-4, where the function (300), which is another function than the control of the clutch (240) in the vehicle (100), comprises control of a hook-lift, engine speed, flat-bed angle on a tip truck, snow scraper, derrick, gripper arm, winch, foldable ladder, door, excavator, trailer hitch, hoist, or some other configurable function.

6. The method (400) according to claim 2 or one of claims 3-5 including claim 2, wherein the electronic clutch control (200) is connected to the vehicle's control bus (290), wherein the input device (215) comprises a touch screen and wherein the controllable function (300) may be selected by the driver from a list, via the input device (215).

7. Electronic clutch control (200) for control of a function (300) in a vehicle (100), wherein the function (300) is another function than control of a clutch (240) in the vehicle (100), through the method (400) according to any of claims 1-6.

8. The electronic clutch control (200) according to claim 7, wherein this consists of a pedal arranged for manoeuvre by the driver's foot.

9. Calculation device (210) for control of a function (300) in a vehicle (100), via an electronic clutch control (200), wherein the calculation device (210) is **characterised by**:
a processor circuit (520), arranged to determine the function (300) which the electronic clutch control (200) should control, wherein said function (300) is another function than control of a clutch (240) in the vehicle (100); and also arranged to detect a position of the electronic clutch control (200) via a sensor (205); also arranged to generate a control signal coinciding with the detected position and the determined function (300) of the electronic clutch control (200); and to control the determined function (300), via the generated control signal.

10. Computer program for control of a function (300) in a vehicle (100), via an electronic clutch control (200), by an embodiment of a method (400) according to one of claims 1-6, when the computer program is executed in a processor circuit (520) in a calculation device (210) according to claim 9.

11. System (500) for control of a function (300) in a vehicle (100), via an electronic clutch control (200), through a method (400) according to claims 1-6, comprising:
an electronic clutch control (200) according to any of claims 7-8,
a calculation device (210) according to claim 9,
a sensor (205), arranged to detect a position of the clutch control (200), and
an input device (215) arranged to facilitate a selection of a function (300) of the electronic clutch control (200).

12. Vehicle (100) comprising a system (500) according to claim 11.
